# EUROPÄISCHE PATENTSCHRIFT

(11) **EP 3 914 486 B1**
(45) Veröffentlichungstag und Bekanntmachung des Hinweises auf die Patenterteilung: **08.03.2023**
(21) Anmeldenummer: 20701704.7
(22) Anmeldetag: 16.01.2020
(51) Int. Cl.: B60T 8/40, B60T 8/44, B60T 8/94, B60T 13/66

(54) **VERFAHREN ZUM BETREIBEN EINER FAHRZEUGBREMSANLAGE, STEUERGERÄT UND FAHRZEUG**
METHOD FOR OPERATING A VEHICLE BRAKE SYSTEM, CONTROL UNIT AND VEHICLE
PROCÉDÉ DE FONCTIONNEMENT D'UN SYSTÈME DE FREINAGE DE VÉHICULE, UNITÉ DE COMMANDE ET VÉHICULE

(30) Priorität: 24.01.2019 DE 102019200826
(43) Veröffentlichungstag der Anmeldung: 01.12.2021
(73) Patentinhaber: Robert Bosch GmbH, 70442 Stuttgart (DE)
(72) Erfinder: WAGNER, Jochen, 71696 Moeglingen (DE); MARQUART, Martin, 78564 Reichenbach (DE); HAAG, Florian, 74248 Ellhofen (DE)
(86) Internationale Anmeldenummer: PCT/EP2020/051043
(87) Internationale Veröffentlichungsnummer: WO 2020/152027

(56) Entgegenhaltungen:
- CN-A- 108 437 807
- DE-A1-102016 225 694
- US-B1- 6 375 282

## Beschreibung

Die vorliegende Erfindung betrifft ein Verfahren zum Betreiben einer Fahrzeugbremsanlage gemäß dem Oberbegriff des Anspruchs 1. Eine Fahrzeugbremsanlage, die nach dem Verfahren betreibbar ist, umfasst einen Bremskraftverstärker und eine elektronische Schlupfregeleinrichtung, die bei einer Störung des Bremskraftverstärkers als Rückfallebene nutzbar ist.

Ferner betrifft die Erfindung ein Steuergerät, das dazu eingerichtet ist, das erfindungsgemäße Verfahren auszuführen. Darüber hinaus wird ein Fahrzeug mit einer Fahrzeugbremsanlage und einem Steuergerät beansprucht, das dazu eingerichtet ist, das erfindungsgemäße Verfahren auszuführen.

### Stand der Technik

Eine Fahrzeugbremsanlage der vorstehend genannten Art geht beispielhaft aus der Offenlegungsschrift DE 10 2016 225 694 A1 hervor. Sie umfasst sowohl einen Bremskraftverstärker als auch eine Schlupfregeleinrichtung. Die Schlupfregeleinrichtung ermöglicht eine radindividuelle Verteilung eines Bremsdrucks auf mehrere Radbremsen. Bei einer Störung des Bremskraftverstärkers übernimmt die Schlupfregeleinrichtung zudem die Bremskraftverstärkung. Mit Hilfe eines Steuergeräts der Schlupfregeleinrichtung wird hierzu der Druck in einer Druckkammer eines Hauptbremszylinders erfasst. Der Druck in der Druckkammer des Hauptbremszylinders steigt an, wenn der Fahrer das Bremspedal betätigt.

Im Störfall, das heißt ohne Bremskraftverstärkung durch den Bremskraftverstärker, ist die anfänglich durch den Fahrer aufzubringende Kraft bei einer Betätigung der Fahrzeugbremsanlage deutlich höher als im Normalfall. In der Regel kann zudem eine Bremskraftunterstützung durch die Schlupfregeleinrichtung erst erfolgen, wenn ein gewisser Vordruck in der Druckkammer des Hauptbremszylinders aufgebaut ist.

Um im Störfall die zur Aktivierung der Schlupfregeleinrichtung erforderliche Initialkraft zu mindern und dem Fahrer ein besseres Pedalgefühl zu geben, wird in der DE 10 2016 225 694 A1 vorgeschlagen, ein erstes und ein zweites Eingangssignal bei der Ansteuerung eines Druckerzeugers der Schlupfregeleinrichtung zu verwenden. Die beiden Eingangssignale, von denen das erste einen Bremswunsch des Fahrers anzeigt und das zweite den vom Fahrer generierten Bremsdruck in der Druckkammer des Hauptbremszylinders repräsentiert, werden zu Auswertesignalen weiterverarbeitet, die anschließend zu einem Summenwert addiert werden, der einem Bremsdrucksollwert entspricht. Dieser wiederum wird zu einem entsprechenden Ansteuersignal für einen Druckerzeuger der Schlupfregeleinrichtung umgewandelt.

Ausgehend von dem vorstehend genannten Stand der Technik soll ein Verfahren zum Betreiben einer Fahrzeugbremsanlage angegeben werden, das bei einer Störung eines Bremskraftverstärkers einen Druckaufbau in einer Druckkammer eines Hauptbremszylinders durch eine Schlupfregeleinrichtung selbst dann ermöglicht, wenn der Fahrer das Bremspedal nicht betätigt. Für den Fall, dass der Fahrer das Bremspedal betätigt, soll eine Verbesserung des Pedalgefühls durch eine Verminderung der erforderlichen Initialkraft erreicht werden.

Zur Lösung der Aufgabe wird das Verfahren mit den Merkmalen des Anspruchs 1 vorgeschlagen. Vorteilhafte Weiterbildungen der Erfindung sind den Unteransprüchen zu entnehmen. Darüber hinaus werden das Steuergerät mit den Merkmalen des Anspruch 9 sowie das Fahrzeug mit den Merkmalen des Anspruchs 10 vorgeschlagen.

### Offenbarung der Erfindung

Vorgeschlagen wird ein Verfahren zum Betreiben einer Fahrzeugbremsanlage, die einen Bremskraftverstärker und eine elektronische Schlupfregeleinrichtung umfasst. Bei dem Verfahren wird die Schlupfregeleinrichtung bei einer Störung des Bremskraftverstärkers als Rückfallebene genutzt. Erfindungsgemäß wird bei Detektion einer Störung des Bremskraftverstärkers die Stellung eines Gaspedals ermittelt und, unter der Voraussetzung, dass das Gaspedal gelöst ist, mit Hilfe der Schlupfregeleinrichtung ein vorgegebener Initialdruck in einer Druckkammer eines Hauptbremszylinders der Fahrzeugbremsanlage aufgebaut. Auf diese Weise wird eine Verzögerung des Fahrzeugs bewirkt, und zwar selbst dann, wenn der Fahrer das Bremspedal nicht betätigt. Wird anschließend durch den Fahrer das Bremspedal betätigt, ist der Kraftaufwand gering, da die erforderliche Initialkraft bereits mit Hilfe der Schlupfregeleinrichtung generiert wurde. Im Ergebnis wird somit eine Verbesserung des Pedalgefühls für den Fahrer erreicht.

Dadurch, dass erfindungsgemäß ein Druckaufbau in der Druckkammer des Hauptbremszylinders nur bei gelöstem, das heißt bei nicht betätigtem Gaspedal erfolgt, kann das vorgeschlagene Verfahren ohne Einbindung eines Antriebsstrangs des Fahrzeugs durchgeführt werden. Insbesondere muss keine Beschleunigung durch den Antriebsstrang unterdrückt werden, um die gewünschte Verzögerung zu erreichen. Die Umsetzung erfolgt ausschließlich im Bremssystem des Fahrzeugs.

Der mit Hilfe der Schlupfregeleinrichtung in der Druckkammer des Hauptbremszylinders aufgebaute Initialdruck kann beispielsweise 8 bar betragen.

Der Druckaufbau auf Initialdruck in der Druckkammer des Hauptbremszylinders wird vorzugsweise mit Hilfe der Schlupfregeleinrichtung zeitlich gesteuert. Die zeitliche Steuerung ermöglicht einen Druckaufbau auf Initialdruck unabhängig von einem Vordruck in der Druckkammer des Hauptbremszylinders und damit unabhängig von der Stellung des Bremspedals der Fahrzeugbremsanlage. Das heißt, dass nicht erst ein gewisser Vordruck in der Druckkammer des Hauptbremszylinders aufgebaut werden muss.

Bevorzugt wird bei der Durchführung des Verfahrens, das heißt bei gelöstem Gaspedal, die Stellung eines Bremspedals der Fahrzeugbremsanlage ermittelt. Für den Fall, dass eine Betätigung des Bremspedals detektiert wird, kann ein in der Druckkammer des Hauptbremszylinders durch die Betätigung des Bremspedals generierter Vordruck beim Druckaufbau in der Druckkammer des Hauptbremszylinders berücksichtigt werden. Der Druckaufbau erfolgt dann bevorzugt proportional zum generierten Vordruck, und zwar verstärkt um einen Faktor x, beispielsweise um einen Faktor 3.

Des Weiteren bevorzugt wird bei einer detektierten Betätigung des Bremspedals mit Hilfe der Schlupfregeleinrichtung ein Druck in der Druckkammer des Hauptbremszylinders aufgebaut, der einem um einen Faktor x verstärkten Vordruck zuzüglich Initialdruck entspricht. Der Mindestdruck in der Druckkammer des Hauptzylinders entspricht somit dem mit Hilfe der Schlupfregeleinrichtung generierten Initialdruck.

Zur Ermittlung der Stellung des Bremspedals wird vorzugsweise der Druck in der Druckkammer des Hauptbremszylinders gemessen. Eine entsprechende Sensorik ist in der Regel bereits vorhanden, so dass hierauf zurückgegriffen werden kann. Zwar muss erst ein gewisser Vordruck generiert werden, damit dieser mittels der Sensorik erfasst wird. Da erfindungsgemäß der Druckaufbau auf Initialdruck unabhängig von einer Betätigung des Bremspedals erfolgt, ist unerheblich, ob die Betätigung des Bremspedals gleich oder erst ab dem Aufbau eines gewissen Vordrucks detektiert wird.

In Weiterbildung der Erfindung wird vorgeschlagen, dass eine weitere Rückfallebene geschaffen wird, beispielsweise unter Verwendung einer Binärinformation gemäß dem eingangs genannten Stand der Technik. Über die zusätzliche Rückfallebene kann eine weitere Verbesserung der Bremscharakteristik der Fahrzeugbremsanlage erzielt werden.

Vorteilhafterweise wird nach einem Druckaufbau auf Initialdruck in der Druckkammer des Hauptbremszylinders erneut die Stellung des Gaspedals ermittelt. Wird nach einem Druckaufbau auf Initialdruck eine Betätigung des Gaspedals detektiert, wird Druck in der Druckkammer des Hauptbremszylinders abgebaut. Der Druckabbau soll nach einer zuvor bewirkten Verzögerung des Fahrzeugs eine erneute Beschleunigung des Fahrzeugs ermöglichen. Der Druckabbau wird dabei bevorzugt mit Hilfe der Schlupfregeleinrichtung zeitlich gesteuert.

Bevorzugt wird eine Störung des Bremskraftverstärkers mit Hilfe eines Steuergeräts der Schlupfregeleinrichtung detektiert, das hierzu in datenübertragender Weise mit dem Bremskraftverstärker verbunden wird, beispielsweise über einen CAN-Bus. Die Störung kann dann dem Steuergerät durch eine entsprechende Nachricht des Bremskraftverstärkers mitgeteilt werden. Ist der Bremskraftverstärker in der Weise gestört, dass eine entsprechende Nachricht nicht mehr abgesetzt werden kann, ist die Störung an dem Kommunikationsausfall erkennbar. Sofern der Bremskraftverstärker ein Unterdruckbremskraftverstärker ist, kann eine Störung auch durch Auswertung eines Unterdrucksensors detektiert werden.

Da bevorzugt bei der Durchführung des erfindungsgemäßen Verfahrens ein Steuergerät eingesetzt wird, wird ferner ein Steuergerät vorgeschlagen, das dazu eingerichtet ist, das erfindungsgemäße Verfahren auszuführen. Die Einrichtung kann beispielsweise das Aufspielen eines Computerprogramms umfassen, das einen Programmcode enthält, der das Verfahren ausführt, wenn das Computerprogramm auf dem Steuergerät abläuft.

Darüber hinaus wird ein Fahrzeug mit einer Fahrzeugbremsanlage und einem Steuergerät vorgeschlagen, wobei das Steuergerät dazu eingerichtet ist, das erfindungsgemäße Verfahren auszuführen. Die zuvor in Verbindung mit dem Verfahren beschriebenen Vorteile sind auch mit dem Fahrzeug erreichbar. Insbesondere kann der Bremskomfort für den Fahrer des Fahrzeugs bei einem Ausfall des Bremskraftverstärkers erhöht werden.

Die Erfindung wird nachfolgend anhand der beigefügten Zeichnungen näher erläutert. Diese zeigen:
- Fig. 1: ein Flussdiagramm zur graphischen Darstellung eines typischen Ablaufs eines erfindungsgemäßen Verfahrens,
- Fig. 2: eine schematische Darstellung der Verzögerungs- und Beschleunigungscharakteristik über der Gas- bzw. Bremspedalstellung gemäß dem Stand der Technik und gemäß einer ersten Ausführungsform der Erfindung, und
- Fig. 3: eine schematische Darstellung der der Verzögerungs- und Beschleunigungscharakteristik über der Gas- bzw. Bremspedalstellung gemäß dem Stand der Technik sowie gemäß einer ersten und einer zweiten Ausführungsform der Erfindung.

### Ausführliche Beschreibung der Zeichnungen

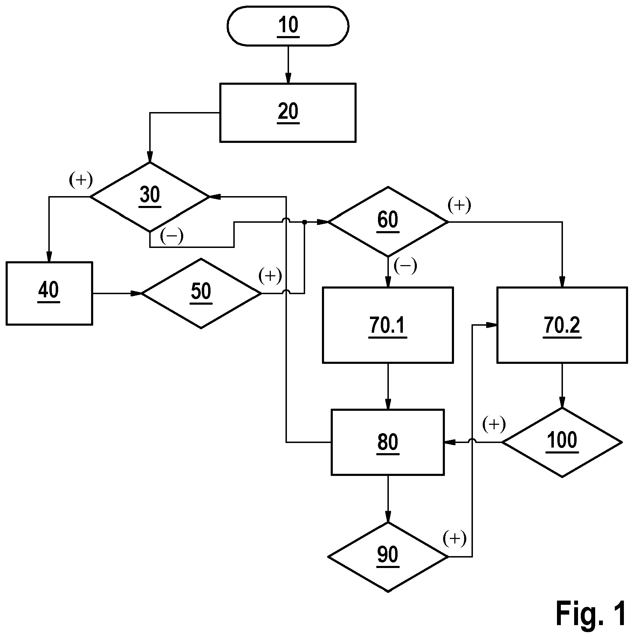

Anhand des in der Fig. 1 dargestellten Flussdiagramms wird zunächst ein typischer Verfahrensablauf eines erfindungsgemäßen Verfahrens beschrieben.

Ausgehend von einem Zustand 10, in dem die Fahrzeugbremsanlage noch fehlerfrei arbeitet, wird in Schritt 20 eine Störung eines Bremskraftverstärkers der Fahrzeugbremsanalage entdeckt. Mit Eintritt des Störfalls wird in einem nächsten Schritt 30 die Stellung des Gaspedals ermittelt, um zu prüfen, ob der Fahrer das Gaspedal betätigt oder das Gaspedal gelöst ist. Denn bei einer Betätigung des Gaspedals wird das Fahrzeug beschleunigt, so dass eine Verzögerung des Fahrzeugs nur unter Einbindung eines Antriebsstrangs möglich ist. Dies soll vorliegend jedoch verhindert werden, so dass bei einer Betätigung des Gaspedals in Schritt 40 kein Druck in einer Druckkammer eines Hauptbremszylinders mit Hilfe einer Schlupfregeleinrichtung aufgebaut wird. Wird bei erneuter Prüfung 50 festgestellt, dass nunmehr das Gaspedal gelöst ist, wird in Schritt 60 zunächst die Stellung des Bremspedals ermittelt. Wird aufgrund eines fehlenden Vordrucks in der Druckkammer des Hauptbremszylinders angenommen, dass das Bremspedal gelöst ist, erfolgt in Schritt 70.1 ein zeitlich gesteuerter Druckaufbau in der Druckkammer des Hauptbremszylinders auf einen vorgegebenen Initialdruck, beispielsweise auf 8 bar. Ist der Initialdruck aufgebaut bzw. der Zustand 80 erreicht, wird in Schritt 90 erneut die Stellung des Bremspedals ermittelt, um zu prüfen, ob der Fahrer nunmehr das Bremspedal betätigt hat. Sofern dies der Fall ist wird in Schritt 70.2 mit Hilfe der Schlupfregeleinrichtung ein weiterer Druckaufbau in der Druckkammer des Hauptbremszylinders generiert, der - additiv zum Initialdruck - dem vom Fahrer durch Betätigen des Bremspedals bewirkten Vordruck mal einem Faktor x entspricht. Ergibt eine in Schritt 100 durchgeführte erneute Prüfung der Bremspedalstellung, dass das Bremspedal gelöst ist, wird der Druck in der Druckkammer auf Initialdruck abgesenkt, so dass erneut Zustand 80 erreicht wird. Anschließend wird der Schritt 30 wiederholt, um festzustellen, ob erneut das Gaspedal betätigt wird. Ist dies der Fall, wird in Schritt 40 nicht nur kein Druck in der Druckkammer aufgebaut, sondern aktiv Druck abgebaut, um eine Beschleunigung des Fahrzeugs zu ermöglichen.

Mit Hilfe des erfindungsgemäßen Verfahrens kann eine positive Veränderung der Bremscharakteristik eines Fahrzeugs erzielt werden, die sich in einem erhöhten Bremskomfort für den Fahrer äußert. Die Beschleunigungscharakteristik des Fahrzeugs bleibt dabei unverändert.

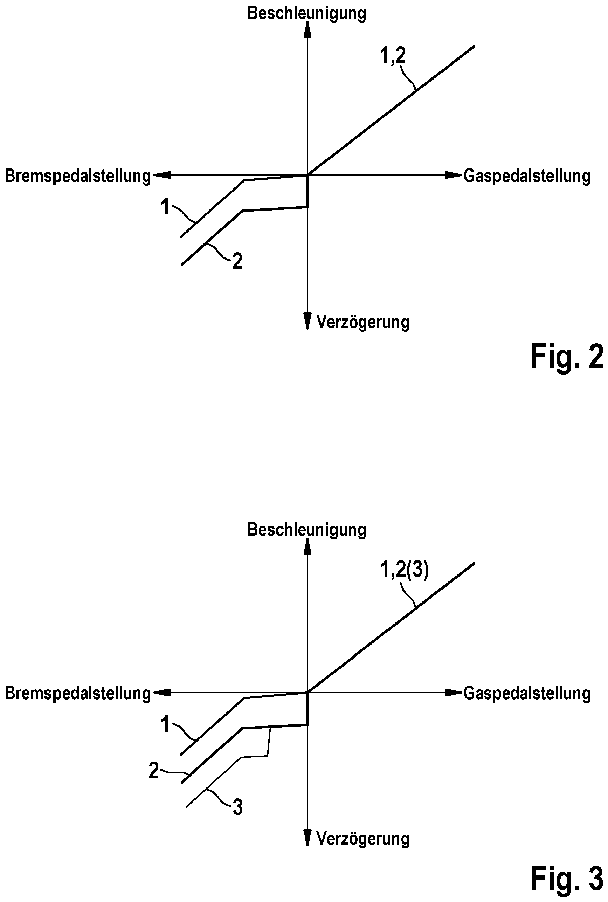

Wie beispielhaft in der Fig. 2 dargestellt, wird das Fahrzeug bei einer Betätigung des Gaspedals proportional zur Stellung des Gaspedals beschleunigt (siehe Graph 1, 2 auf der rechten Hälfte der Fig. 2). Wird eine Störung des Bremskraftverstärkers detektiert, wird zunächst geprüft, ob das Gaspedal betätigt wird oder das Gaspedal gelöst ist. Ist Letzteres der Fall, kann eine Bremskraftverstärkung entsprechend dem vorgeschlagenen erfindungsgemäßen Verfahren durchgeführt werden. Hierzu wird zunächst mit Hilfe der Schlupfregeleinrichtung ein Druckaufbau auf eine Initialkraft bewirkt, und zwar unabhängig davon, ob das Bremspedal zeitgleich betätigt wird oder nicht. Der Initialdruck ist so hoch gewählt, dass eine deutliche Verzögerung des Fahrzeugs bewirkt wird (siehe senkrechter Verlauf des Graphen 2 in der Mitte der Fig. 2). Wird das Bremspedal durch den Fahrer betätigt, führt dies allmählich zu einem weiteren Druckaufbau im Druckzylinder des Hauptbremszylinders, der jedoch im Vergleich zum bereits aufgebauten Initialdruck gering ist und sich somit kaum auf die Verzögerung des Fahrzeugs auswirkt (siehe leicht abfallender Verlauf des Graphen 2 in der linken Hälfte der Fig. 2). Erst wenn ein bestimmter Vordruck erreicht ist, wird dieser erfasst und mit Hilfe der Schlupfregeleinrichtung um einen bestimmten Faktor x verstärkt (siehe steil abfallender Verlauf des Graphen 2 in der linken Hälfte der Fig. 2).

Der Stand der Technik ist mittels des Graphen 1 dargestellt. Hier hängt die Verzögerung des Fahrzeugs von der Betätigung des Bremspedals durch den Fahrer ab. Das heißt, dass der Fahrer das Bremspedal betätigen muss und zunächst ein gewisser Vordruck in der Druckkammer des Hauptbremszylinders erreicht sein muss, bis mit Hilfe der Schlupfregeleinrichtung eine Druckverstärkung erzielbar ist.

Eine Weiterbildung der Erfindung ist der Fig. 3 zu entnehmen. In der Fig. 3 symbolisiert der Graph 3 eine unter Verwendung einer Binärinformation geschaffene weitere Rückfallebene. Hierbei kann es sich beispielsweise um eine wegabhängige Information handeln, aus welcher sich die Bremspedalstellung ableiten lässt. Die erforderliche Messung kann mittels eines Wegsensors des Bremskraftverstärkers durchgeführt werden. Dies setzt jedoch voraus, dass die Störung nicht zu einem Komplettausfall des Bremskraftverstärkers geführt hat.

## Patentansprüche

1. Verfahren zum Betreiben einer Fahrzeugbremsanlage, umfassend einen Bremskraftverstärker und eine elektronische Schlupfregeleinrichtung, die bei einer Störung des Bremskraftverstärkers als Rückfallebene genutzt wird,
**dadurch gekennzeichnet, dass** bei Detektion (20) einer Störung des Bremskraftverstärkers die Stellung eines Gaspedals ermittelt wird (30) und, unter der Voraussetzung, dass das Gaspedal gelöst ist, mit Hilfe der Schlupfregeleinrichtung ein vorgegebener Initialdruck in einer Druckkammer eines Hauptbremszylinders der Fahrzeugbremsanlage aufgebaut wird (70.1), so dass eine Verzögerung des Fahrzeugs bewirkt wird.

2. Verfahren nach Anspruch 1,
**dadurch gekennzeichnet, dass** der Druckaufbau auf Initialdruck mit Hilfe der Schlupfregeleinrichtung zeitlich gesteuert wird.

3. Verfahren nach Anspruch 1 oder 2,
**dadurch gekennzeichnet, dass** die Stellung eines Bremspedals der Fahrzeugbremsanlage ermittelt wird (60) und bei einer detektierten Betätigung des Bremspedals ein in der Druckkammer des Hauptbremszylinders durch die Betätigung des Bremspedals generierter Vordruck beim Druckaufbau in der Druckkammer des Hauptbremszylinders berücksichtigt wird.

4. Verfahren nach Anspruch 3,
**dadurch gekennzeichnet, dass** bei einer detektierten Betätigung des Bremspedals mit Hilfe der Schlupfregeleinrichtung ein Druck in der Druckkammer des Hauptbremszylinders aufgebaut wird (70.2), der einem um einen Faktor (x) verstärkten Vordruck zuzüglich Initialdruck entspricht.

5. Verfahren nach Anspruch 3 oder 4,
**dadurch gekennzeichnet, dass** zur Ermittlung (60) der Stellung des Bremspedals der Druck in der Druckkammer des Hauptbremszylinders gemessen wird.

6. Verfahren nach einem der vorhergehenden Ansprüche,
**dadurch gekennzeichnet, dass** eine weitere Rückfallebene geschaffen wird, beispielsweise unter Verwendung einer Binärinformation.

7. Verfahren nach einem der vorhergehenden Ansprüche,
**dadurch gekennzeichnet, dass** nach einem Druckaufbau auf Initialdruck in der Druckkammer des Hauptbremszylinders erneut die Stellung des Gaspedals ermittelt wird (30) und bei betätigtem Gaspedal Druck abgebaut wird, wobei vorzugsweise der Druckabbau mit Hilfe der Schlupfregeleinrichtung zeitlich gesteuert wird.

8. Verfahren nach einem der vorhergehenden Ansprüche,
**dadurch gekennzeichnet, dass** eine Störung des Bremskraftverstärkers mit Hilfe eines Steuergeräts der Schlupfregeleinrichtung detektiert wird, das hierzu in datenübertragender Weise mit dem Bremskraftverstärker verbunden wird, beispielsweise über einen CAN-Bus.

9. Steuergerät, das dazu eingerichtet ist, ein Verfahren nach einem der vorhergehenden Ansprüche auszuführen.

10. Fahrzeug mit einer Fahrzeugbremsanlage und mit einem Steuergerät nach Anspruch 9.

## Claims

1. Method for operating a vehicle brake system, comprising a brake force amplifier and an electronic slip control device, which is used as a fall-back level in the event of a malfunction of the brake force amplifier, **characterized in that**, if a malfunction in the brake force amplifier is detected (20), the position of an accelerator pedal is determined (30) and, provided that the accelerator pedal is released, a predefined initial pressure is built up (70.1) in a pressure chamber of a master brake cylinder of the vehicle brake system with the aid of the slip control device, thereby causing deceleration of the vehicle.

2. Method according to Claim 1,
**characterized in that** the build-up of pressure to initial pressure is controlled with respect to time with the aid of the slip control device.

3. Method according to Claim 1 or 2,
**characterized in that** the position of a brake pedal of the vehicle brake system is determined (60) and, when operation of the brake pedal is detected, an admission pressure generated in the pressure chamber of the master brake cylinder by operation of the brake pedal is taken into account when pressure builds up in the pressure chamber of the master brake cylinder.

4. Method according to Claim 3,
**characterized in that**, when operation of the brake pedal is detected, a pressure which corresponds to an admission pressure boosted by a factor (x) plus the initial pressure is built up (70.2) in the pressure chamber of the master brake cylinder with the aid of the slip control device.

5. Method according to Claim 3 or 4,
**characterized in that** the pressure in the pressure chamber of the master brake cylinder is measured in order to determine (60) the position of the brake pedal.

6. Method according to one of the preceding claims, **characterized in that** a further fall-back level is created, for example using binary information.

7. Method according to one of the preceding claims, **characterized in that**, after a build-up of pressure to initial pressure in the pressure chamber of the master brake cylinder, the position of the accelerator pedal is determined (30) once again and, when the accelerator pedal is operated, pressure is reduced, wherein the reduction in pressure is preferably controlled with respect to time with the aid of the slip control device.

8. Method according to one of the preceding claims, **characterized in that** a malfunction in the brake force booster is detected with the aid of a controller of the slip control device, the controller being connected in a data-transmitting manner to the brake force amplifier, for example via a CAN bus, for this purpose.

9. Controller which is designed to execute a method according to one of the preceding claims.

10. Vehicle having a vehicle brake system and having a controller according to Claim 9.

## Revendications

1. Procédé de fonctionnement d'un système de freinage de véhicule qui comprend un servofrein et un dispositif anti-patinage électronique qui est utilisé comme niveau de retour en cas de dysfonctionnement du servofrein, **caractérisé en ce que**, lorsqu'un dysfonctionnement du servofrein est détecté (20), la position d'une pédale d'accélérateur est déterminée (30) et, à condition que la pédale d'accélérateur soit relâchée, une pression initiale spécifiée est établie dans une chambre de pression d'un maître-cylindre de frein du système de freinage de véhicule à l'aide du dispositif anti-patinage (70.1) de sorte que le véhicule décélère.

2. Procédé selon la revendication 1,
**caractérisé en ce que** la montée en pression jusqu'à la pression initiale est commandée dans le temps à l'aide du dispositif anti-patinage.

3. Procédé selon la revendication 1 ou 2,
**caractérisé en ce que** la position d'une pédale de frein du système de freinage de véhicule est déterminée (60) et, lorsque l'actionnement de la pédale de frein est détectée, une pression d'admission générée dans la chambre de pression du maître-cylindre de frein par l'actionnement de la pédale de frein est prise en compte lors de la montée en pression dans la chambre de pression du maître-cylindre de frein.

4. Procédé selon la revendication 3,
**caractérisé en ce que** lorsqu'un actionnement de la pédale de frein est détecté à l'aide du dispositif anti-patinage, une pression qui correspond à une pression d'admission augmentée d'un facteur (x) plus la pression initiale est établie dans la chambre de pression du maître-cylindre de frein (70.2).

5. Procédé selon la revendication 3 ou 4,
**caractérisé en ce que** la pression dans la chambre de pression du maître-cylindre de frein est mesurée pour déterminer (60) la position de la pédale de frein.

6. Procédé selon l'une des revendications précédentes, **caractérisé en ce qu'**un autre niveau de retour est prévu par exemple à l'aide d'une information binaire.

7. Procédé selon l'une des revendications précédentes, **caractérisé en ce que**, après une montée en pression jusqu'à la pression initiale dans la chambre de pression du maître-cylindre de frein, la position de la pédale d'accélérateur est à nouveau déterminée (30) et la pression est réduite lorsque la pédale d'accélérateur est actionnée,
de préférence la réduction de pression étant commandée dans le temps à l'aide du dispositif anti-patinage.

8. Procédé selon l'une des revendications précédentes, **caractérisé en ce qu'**un dysfonctionnement du servofrein est détecté à l'aide d'une unité de commande du dispositif anti-patinage, laquelle est reliée au servofrein de manière à transmettre des données, par exemple par le biais un bus CAN.

9. Unité de commande qui est conçue pour mettre en œuvre un procédé selon l'une des revendications précédentes.

10. Véhicule comprenant un système de freinage de véhicule et une unité de commande selon la revendication 9.
